# EUROPEAN PATENT SPECIFICATION

(11) **EP 1 320 916 B1**
(45) Date of publication and mention of the grant of the patent: **08.07.2009**
(21) Application number: 01967866.3
(22) Date of filing: 06.09.2001
(51) Int. Cl.: H02G 1/16, H01R 9/05

(54) **A METHOD OF RESTORING ARMOURING ON A CABLE**
VERFAHREN ZUR WIEDERHERSTELLUNG DER ARMIERUNG AN EINEM KABEL
PROCEDE DE RESTAURATION DU BLINDAGE SUR UN CABLE

(30) Priority: 07.09.2000 SE 0003153
(43) Date of publication of application: 25.06.2003
(73) Proprietor: ABB AB, 721 83 Västerås (SE)
(72) Inventor: HANSSON, Anders, S-371 60 Lyckeby (SE); NYBERG, Sverker, S-371 46 Karlskrona (SE); SUNNEGÅRDG, Peter, S-372 50 Kallinge (SE)
(74) Representative: Dahlstrand, Björn
(86) International application number: PCT/SE2001/001908
(87) International publication number: WO 2002/021653

(56) References cited:
- EP-A2- 0 450 271
- DE-C1- 465 409
- US-A- 4 495 379
- US-A- 4 965 411

## Description

### TECHNICAL FIELD

The present invention relates to a method of restoring armouring on a cable, in connection with jointing or after a repair of a cable, whereby a plurality of armour wires, distributed essentially uniformly around the circumference of the cable, are brought to make contact with the cable, in the form of helical lines or the like, and are fixed to the envelope surface of the cable. (See document US-A-4 495 379).

By restoring armouring is meant here both replacement of armouring which has been removed for jointing or repair work and new armouring for the purpose of joining together the armouring of the cables, for example on either side of a joint. By cable is meant a means of transmitting electric current designed with one or more conductors surrounded by insulating material. The word cable is used in the following also as a general expression for the two parts which are being joined together as well as for designating the joined-together result including the joint. The invention is primarily intended to be used when working with high-voltage cable for underwater use, for example on the seabed.

### BACKGROUND ART

In addition to a satisfactory electrical insulation, electric cables must usually also possess a mechanical strength for relatively great tensile stresses. Also in those cases where the cable during operation remains unloaded in the ground or on a seabed, the stresses may become very great when laying the cable. When manufacturing cable, the cable is therefore provided with one or more layers of armouring which, besides protecting against mechanical damage, is to be able to withstand the expected load when laying the cable. In connection with jointing while laying the cable, or in connection with repairs which necessitate removal of the armouring, new armouring must be supplied over the joint or the repair and be connected to the armouring on either side of the joint by means of, for example, weld joints.

One known method for restoring armouring comprises laying pre-profiled wires manually around the cable. A method for such restoration is described in EP 450 271. This is a time-consuming operation which, in addition, requires both strength and experience for the result to become satisfactory. Since the cross-section area of the cable usually becomes larger at, for example, a joint and deviations from a circular shape may occur, the work often becomes problematic. During transport of pre-profiled wires to a place of work, there is also the risk of the wires being deformed and that they either have to be adjusted or rejected.

### OBJECTS OF THE INVENTION

The main object of the invention is to suggest a simple, safe and flexible method of restoring armouring of cables in connection with jointing or after a repair.

A second object is to suggest a method of restoring armouring of cables in connection with jointing or after a repair without the use of pre-profiled armour wires.

A third object is to suggest a method of restoring armouring of cables with non-circular cross sections in connection with jointing or after a repair.

### SUMMARY OF THE INVENTION

The present invention relates to a method for restoring armouring on a cable, in connection with jointing or after a repair of a cable, whereby a plurality of armour wires, distributed essentially uniformly around the circumference of the cable, are brought to make contact with the cable, in the form of helical lines or the like, and are fixed to the envelope surface of the cable.

According to the invention, essentially straight armour wires are connected to the armouring of the cable on a first side of the joint or the repair, such that a cage, or part of a cage, limited by a cage wall consisting of essentially parallel armour wires, is formed. Torsion is applied to the cage wall such that the armour wires are given the shape of helical lines or an essentially helical-like shape close to the surface of the cable and the joint or the repair. The other ends of the armour wires are connected to the armouring of the cable on the second side of the joint or the repair. The armouring is lashed over the whole, or essentially the whole, region of the joint or the repair.

### GENERAL DESCRIPTION OF THE INVENTION

When laying high-voltage cables, above all on the seabed, the mechanical stresses on the cable become very great. The cable must be designed and dimensioned to carry the length of cable which is not yet supported by the seabed, which may be question of hundreds of metres.

High-voltage cables for use on the seabed must therefore be provided with supporting elements, for example armour wires around the primary electrical insulation. In connection with jointing or a repair, the armourings on both sides of the joint or the repair must be connected to each other to retain the tensile strength. This can be done by bringing a plurality of armour wires, distributed essentially uniformly around the circumference of the cable, to make contact with the cable, in the form of helical lines or the like, and be fixed to the envelope surface of the cable, and be welded to the armouring of the cable.

According to the present invention, a method for restoring armouring on a cable, in connection with jointing or after a repair, is suggested. In this method, essentially straight armour wires are connected to the armouring of the cable on a first side of the joint or the repair, such that a cage, or part of a cage, limited by a cage wall consisting of essentially parallel armour wires, is formed. Thereafter, torsion is applied to the cage wall such that the armour wires are given the shape of helical lines, or an essentially helical line-like shape, close to the surface of the joint or the repair. Then, the other ends of the armour wires are connected to the armouring of the cable on the second side of the joint or the repair and, finally, the armouring is lashed over the whole, or essentially the whole, region of the joint or the repair, for example with wire, yarn or polymer tape.

The number of armour wires should be adapted to the circumference of the cable. At a joint or in connection with a repair, a section with a larger diameter is often obtained. According to the invention, this is taken into consideration by either increasing the number of wires in the cage wall with increasing diameter of the joint or the repair, or by reducing the pitch of the helical line with increasing diameter of the joint or the repair. The choice of method must be made while taking into consideration the required tensile strength.

In an advantageous embodiment, the armour wires are fitted through, or placed in some other way in, one or more members which are rotatable around the cable before they are connected to the armouring of the cable on the first side of the joint or the repair. At least one of these rotatable members, a first rotatable member, is passed, while being rotated, along the cable from the first side and towards the second side of the joint or the repair while the armouring is being restored.

Further, a clamping member, adjacent to the first rotatable member, may advantageously be passed after this from the first side of the joint towards the second side of the joint or the repair for the purpose of pressing the armour wires against the surface of the cables and the joint. This clamping member may have a fixed dimension, but must in that case be replaced over a thicker section of the joint. The clamping member may also be manually adjustable or make contact in a resilient manner and adapt itself automatically to the cross section.

Within the scope of the invention, the armouring may also be restored in two or more steps. This may be made by laying, in a first step, only every other wire or by laying wires on one half of the cable only, etc. It is, of course, also possible to restore armouring in more than one layer, by repeating the suggested method.

The rotation of the first rotatable element, to give the desired torsion of the cage, and the longitudinal feed thereof may be made manually or with a mechanical drive means.

In a suitable further development of the method, an application of bitumen or the like is made in connection with restoring the armouring. If armouring occurs in two or more layers, bitumen should be applied separately for each layer.

### BRIEF DESCRIPTION OF THE DRAWINGS

The invention will now be explained in greater detail with reference to the accompanying drawings, wherein
Figure 1 shows an overall view of a device suitable for use according to the suggested method at the start of the armouring;
Figure 2 shows an overall view of the same device at a somewhat later time;
Figure 3 schematically.shows a rotatable member which is part of the device according to Figures 1 and 2;
Figure 4 schematically shows a first clamping member suitable for use in the device according to Figure 2;
Figure 5 schematically shows a second clamping member suitable for use in the device according to Figure 2.

### DESCRIPTION OF THE PREFERRED EMBODIMENTS

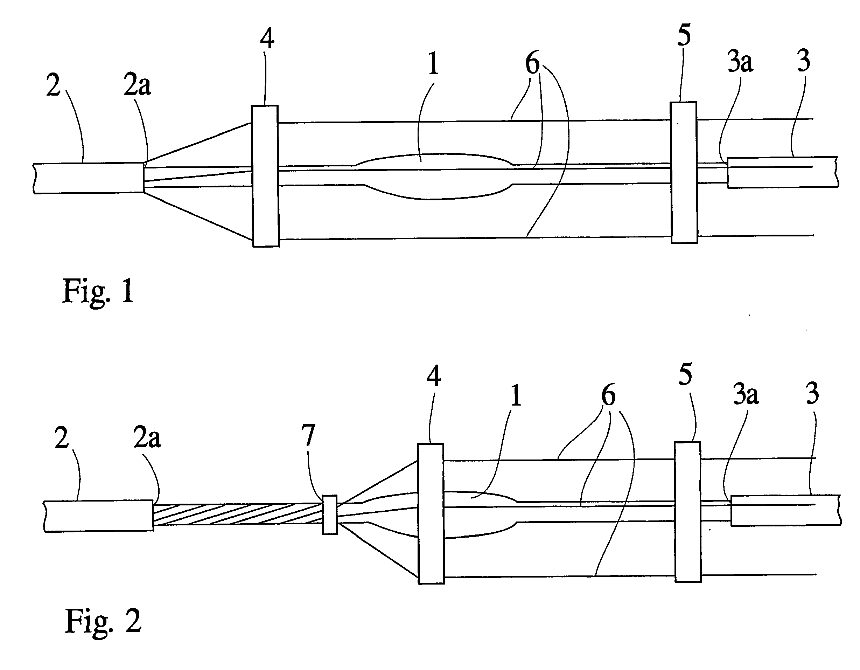

Figures 1 and 2 schematically show a device for restoring the armouring of a cable in two different operating phases at a joint 1 between two cables 2 and 3. The armouring of the cables 2, 3 has been partially removed and terminates at positions 2a, 3a, some distance away from the joint 1. The distance between the positions 2a and 3a may be 10 m or more.

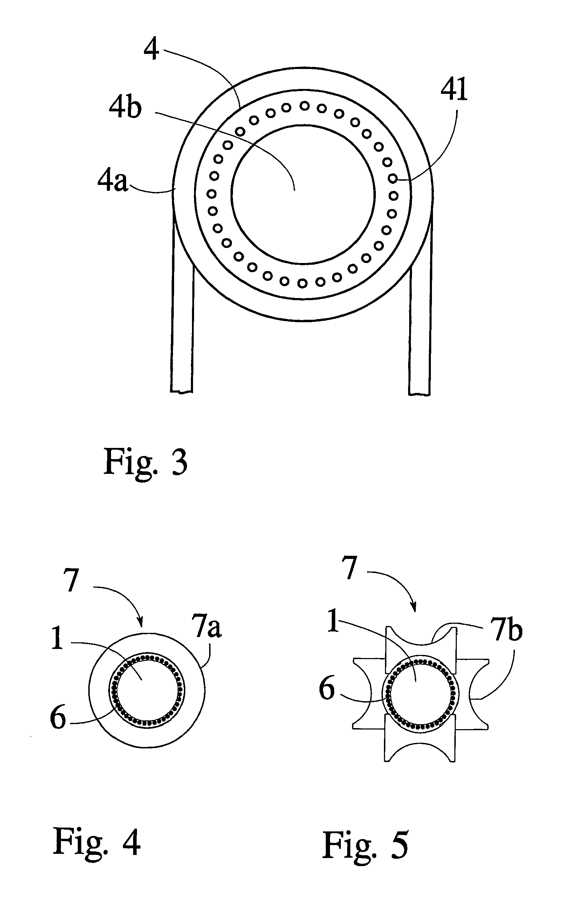

Around the cable joint 1, a plurality of essentially straight armour wires 6, of which only three are shown, have been pulled through a first rotatable member 4 and a second rotatable member 5. A suitable embodiment of these rotatable members 4, 5 is shown in more detail in Figure 3. A clamping member 7 is arranged, in Figure 2, between the first rotatable member 4 and the position 2a on the first cable 2 where the armouring terminates.

Figure 3 shows a rotatable member 4 supported by a non-rotatable means 4a which, in turn, rests on a movable device (not shown), such as a carriage or the like, to enable it to be passed along the cable. The rotatable member 4 has a plurality of holes 41, symmetrically placed, intended to guide and support the armour wires.

Figure 4 shows a first embodiment of a clamping member 7 in the form of a nipple 7a with a fixed inside dimension. Inside the nipple 7a, the cable joint 1 and a plurality of armour wires 6 are retained such that the armour wires 6 are pressed against the cable joint 1.

The rotatable members 4, 5 and the clamping member 7 as well as the non-rotatable means 4a supporting the first rotatable member 4 and the corresponding means supporting the second rotatable member 5 are divisible (in a manner not shown), such that the may be mounted and dismantled in a simple and rational way.

Figure 5 shows a second embodiment of a clamping member 7 comprising four rolls 7b, resembling reels of cotton. By means not shown, the rolls 7b resembling reels of cotton are pressed by spring force against the cable joint 1 and may hence follow the surface also when the cross section varies, and hence the armour wires 6 are efficiently pressed against the cable joint 1.

In the embodiment according to the invention, a suitable number of armour wires 6 are pulled through holes 41 in the rotatable members 4 and 5 and their ends are welded to the armouring of the first cable 2 at 2a. The length of the wires 6 is adapted to the length of armouring which is to be restored and must, in order to achieve this, be considerably longer than the distance between the ends 2a, 3a for the armouring of the two cables 2, 3.

While both of the rotatable members 4 and 5 are simultaneously rotated, the first rotatable member 4 is brought, from a position near the position 2a where the armour wires have been welded to the armouring of the first cable 2, over the joint, towards the position 3a where the armouring of the second cable 3 starts. Rotation and longitudinal movement are adapted such that a tight mat of armour wires 6 is formed across the joint. To ensure this, a clamping member 7 is applied around the cable joint across the mat of armour wires 6 formed and is moved along the joint after the first rotatable member 4. When the clamping member 7 reaches the position 3a where the armouring of the second cable 3 starts, the armour wires 6 are cut off and are welded together with the armouring of the second cable 3.

Thereafter, the whole, or almost the whole, region with restored armouring is lashed with yarn of, for example, polypropylene. Before the lashing, bitumen is applied over the region with the restored armouring, among other things to prevent or at least reduce corrosion.

## Claims

1. A method of restoring armouring on a cable, in connection with jointing or after a repair of a cable, whereby a plurality of armour wires (6), distributed essentially uniformly over the circumference of the cable, are brought to make contact with the cable, in the form of helical lines or the like, and are fixed to the envelope surface of the cable,
**characterized in that**
essentially straight armour wires (6) are connected to the armouring of the cable on a first side of the joint (1) or the repair, such that a cage, or part of a cage, limited by a cage wall consisting of essentially parallel armour wires (6), is formed,
torsion is applied to the cage wall such that the armour wires (6) are given the shape of helical lines, or an essentially helical line-like shape, close to the surface of the joint (1) or the repair,
the other ends of the armour wires (6) are connected to the armouring of the cable on the second side of the joint (1) or the repair, and that
the armouring is lashed over the whole, or essentially the whole, region of the joint (1) or the repair.

2. A method according to claim 1, **characterized in that** the armour wires (6) are fitted through, or otherwise placed in, one or more members (4, 5) which are rotatable around the cable either before they are connected to the armouring of the cable on the first side of the joint or the repair, or after having been connected to the armouring of the cable on the first side of the joint (1) or the repair.

3. A method according to claim 2, **characterized in that** a first rotatable member (4), while being rotated, is moved along the cable from the first side away towards the second side of the joint (1) or the repair.

4. A method according to claim 3, **characterized in that** a clamping member (7), adjacent to the first rotatable member (4), is moved after this from the first side towards the second side of the joint (1) or the repair.

5. A method according to claim 1, 2, 3 or 4, **characterized in that** the number of wires in the cage wall is increased with increasing diameter of the joint (1) or the repair.

6. A method according to claim 1, 2, 3 or 4, **characterized in that** the pitch of the helical line is reduced with increasing diameter of the joint (1) or the repair.

## Patentansprüche

1. Ein Verfahren zur Wiederherstellung der Bewehrung an einem Kabel, in Zusammenhang mit dem Verbinden oder nach einer Ausbesserung eines Kabels, wobei eine Vielzahl von Bewehrungsdrähten (6),die im Wesentlichen gleichmäßig über den Umfang des Kabels verteilt sind, dazu gebracht werden, Kontakt mit dem Kabel herzustellen, in der Form von spiralförmigen Linien oder desgleichen, und an der einhüllenden Oberfläche des Kabels befestigt werden,
**dadurch gekennzeichnet, dass**
im Wesentlichen gerade Bewehrungsdrähte (6) mit der Bewehrung des Kabels an einer ersten Seite der Verbindungsstelle (1) oder der Ausbesserung verbunden werden, so dass ein Käfig oder ein Teil eines Käfigs gebildet wird, der von einer Käfigwand begrenzt ist, die aus im Wesentlichen parallelen Bewehrungsdrähten (6) besteht,
Torsion auf die Käfigwand angewandt wird, so dass den Bewehrungsdrähten (6) die Form von spiralförmigen Linien oder eine im Wesentlichen spirallinienartige Form nahe der Oberfläche der Verbindungsstelle (1) oder der Ausbesserung gegeben wird,
die anderen Enden der Bewehrungsdrähte (6) mit der Bewehrung des Kabels an der zweiten Seite der Verbindungsstelle (1) oder der Ausbesserung verbunden werden, und dass
die Bewehrung über den gesamten oder im Wesentlichen gesamten Bereich der Verbindungsstelle (1) oder der Ausbesserung festgebunden ist.

2. Ein Verfahren gemäß Anspruch 1 **dadurch gekennzeichnet, dass** die Bewehrungsdrähte (6) durch ein oder mehrere Teile (4,5), die um das Kabel rotierbar sind, verlegt oder auf anderem Wege darin angeordnet werden, entweder bevor sie mit der Bewehrung des Kabels an der ersten Seite der Verbindungsstelle oder der Ausbesserung verbunden werden, oder nachdem sie mit der Bewehrung an dem Kabel an der ersten Seite der Verbindungsstelle (1) oder der Ausbesserung verbunden wurden.

3. Ein Verfahren gemäß Anspruch 2 **dadurch gekennzeichnet, dass** ein erstes rotierbares Teil (4), während es rotiert wird, entlang des Kabels weg von der ersten Seiten in Richtung der zweiten Seite der Verbindungsstelle (1) oder der Ausbesserung bewegt wird.

4. Ein Verfahren gemäß Anspruch 3 **dadurch gekennzeichnet, dass** ein Klemmteil (7), welches neben dem ersten rotierbaren Teil (4) liegt, danach von der ersten Seite in Richtung der zweiten Seite der Verbindungsstelle (1) oder der Ausbesserung bewegt wird.

5. Ein Verfahren gemäß Anspruch 1, 2, 3 oder 4 **dadurch gekennzeichnet, dass** die Anzahl der Drähte in der Käfigwand mit steigendem Durchmesser der Verbindungsstelle (1) oder der Ausbesserung steigt.

6. Eine Verfahren gemäß Anspruch 1, 2, 3 oder 4 **dadurch gekennzeichnet, dass** die Ganghöhe der spiralförmigen Linie sich mit steigendem Durchmesser der Verbindungsstelle (1) oder der Ausbesserung verringert.

## Revendications

1. Procédé de restauration du blindage sur un câble, en liaison avec une connexion ou après une réparation d'un câble, dans lequel on met une pluralité de fils (6) de blindage, répartis sensiblement uniformément sur la circonférence du câble, en contact avec le câble, sous la forme de lignes hélicoïdales ou analogues, et on les fixe à la surface formant l'enveloppe du câble,
**caractérisé en ce que**
on relie des fils (6) de blindage sensiblement droits au blindage du câble sur un premier côté de la connexion (1) ou de la réparation, de manière à former une cage ou une partie d'une cage, délimitée par une paroi de cage consistant en des fils (6) de blindage essentiellement parallèles,
on applique une torsion à la paroi de la cage de façon à donner aux fils (6) de blindage leur forme de lignes hélicoïdales, ou une forme sensiblement en lignes hélicoïdales, près de la surface de la connexion (1) ou de la réparation,
on relie les autres extrémités des fils (6) de blindage au blindage du câble sur le deuxième côté de la connexion (1) ou de la réparation, et **en ce que**
on ligature le blindage sur toute ou sensiblement toute la région de la connexion ou de la réparation.

2. Procédé suivant la revendication 1, **caractérisé en ce qu'**on adapte les fils (6) de blindage, ou on les place d'une autre façon, dans un ou plusieurs éléments (4, 5) qui peuvent tourner autour du câble soit avant qu'ils soient reliés au blindage du câble du premier côté de la connexion ou de la réparation, soit après qu'il ont été reliées au blindage du câble du premier côté de la connexion (1) ou de la réparation.

3. Procédé suivant la revendication 2, **caractérisé en ce qu'**on déplace un premier élément (4), pouvant tourner alors qu'il est en rotation, le long du câble en s'éloignant du premier côté en allant vers le deuxième côté de la connexion (1) ou de la réparation.

4. Procédé suivant la revendication 3, **caractérisé en ce qu'**on déplace un élément (7) de serrage, voisin du premier élément (4) pouvant tourner, après celui-ci en s'éloignant du premier côté et en allant du deuxième côté de la connexion (1) ou de la réparation.

5. Procédé suivant la revendication 1, 2, 3 ou 4, **caractérisé en ce qu'**on augmente le nombre de fils de la paroi de la cage au fur et à mesure qu'augmente le diamètre de la connexion (1) ou de la réparation.

6. Procédé suivant la revendication 1, 2, 3 ou 4, **caractérisé en ce qu'**on réduit le pas de la ligne hélicoïdale au fur et à mesure qu'augmente le diamètre de la connexion (1) ou de la réparation.
